# EUROPEAN PATENT APPLICATION

(11) **EP 3 029 441 A1**
(43) Date of publication of application: **08.06.2016**
(21) Application number: 14196543.4
(22) Date of filing: 05.12.2014
(51) Int. Cl.: G01K 1/14

(54) **A fitting for a measuring insert of a thermometer**

(71) Applicant: ENDRESS + HAUSER WETZER GmbH + Co. KG, 87484 Nesselwang (DE)
(72) Inventor: Del Bianco, Massimo, 20900 Monza (MB) (IT)
(74) Representative: Andres, Angelika Maria

(57) **Abstract**

A fitting (F) for a measuring insert (ME) of a thermometer, comprising: a passage (P) through the fitting (F) in which passage (P) said measuring insert (ME) is insertable, a resilient element (B1, B2, B3) and a sealing element (A1, A2, A3) operably coupled to the resilient element (B1, B2, B3), wherein the sealing element (A1, A2, A3) is forced into a first position by the resilient (B1, B2, B3)element in which first position the sealing element (A1, A2, A3) seals the passage (P), wherein the sealing element (A1, A2, A3) is forced out of said first position and into a second position when a measuring insert (ME) is inserted into the passage (P) and thereby allows the positioning of the measuring insert (ME) in the passage (P) of the fitting (F).

## Description

The invention relates to a fitting for a measuring insert of a thermometer. The invention also relates to a measuring device comprising such a fitting.

A fitting in which a measuring insert is insertable has become known from patent publication WO 2011076481. The fitting there comprises a first and a second chamber. A sealing device is employed to seal the first security chamber from the first security chamber in a pressure and/or liquid-tight manner. However, a push bar is used to irreversibly squeeze a sheath made of graphite. The sheath deforms through the squeezing and thereby seals a passage in which it is arranged together with a measuring insert.

Another fitting for a thermometer has become known from patent publication US 2009034584. The Thermometer there possesses an exchangeable measurement insert for measuring process temperatures of liquid or gaseous media in vessels of process installations. The fitting there has no sealing device which serves to seal off the passage between the protective tube and the exterior in case of leakage.

Hence, from the state of the art it is known to seal the passage in which the measuring insert is inserted with the measuring insert being present in the passage, cf. WO 2011076481 and US 2009034584.

However, there are applications in which the insert is inserted into the process and comes into direct contact with the process medium, i.e. no protective tube being employed.

This it is an object of the present invention to permit insertion and extraction of a measuring insert in or out of a process container in working conditions, e.g. the process container may be pressurized, and ensuring that the process medium is confined in the process container at all times.

The problem is solved by a fitting for a measuring insert and a measuring device, e.g. a thermometer, comprising such a fitting.

Regarding the fitting the problem is solved by way of a fitting for a measuring insert of a thermometer, comprising: a passage through the fitting in which passage said measuring insert is insertable, a resilient element and a sealing element operably coupled to the resilient element, wherein the sealing element is forced into a first position by the resilient element in which first position the sealing element seals the passage, wherein the sealing element is forced out of said first position and into a second position when a measuring insert is inserted into the passage and thereby allows the positioning of the measuring insert in the passage of the fitting.

The fitting may also be a part of a kit of parts, which when assembled form a measuring device.

The proposed fitting allows replacing the measurement insert as desired.

The measurement insert is thus exchangeable and arranged, such that it can be inserted into a protective tube which is closed at one end and has a process flange at the closed end. At the end of the protective tube having the flange or process connection the fitting may be connected, e.g. to the protective tube. In another embodiment the fitting may be connected or connectable to the process container itself. The fitting may comprise corresponding means for attaching the fitting to the protective tube or container wall respectively.

However, a protective tube is not necessary. The measuring insert may be inserted directly into the process medium through the fitting which may be attached to process container.

Additionally, a housing in which at least connection terminals for connecting the measurement insert to a, e.g. remote, measured value processing system are arranged may be provided. The housing may also be attached to the fitting. The housing may also comprise a measuring electronics to process the signal generated by a sensor element arranged in the measuring insert and to produce a measured value.

A measuring device already installed can be enhanced by employing the fitting, e.g. by attaching the fitting to a process connection of the container wall or to a protective sheath. Hence, the insert may be exchanged or withdrawn from the process without the need to interrupt the process, e.g. without having to clean out the container in which the process medium is confined.

In case a protective tube is used the tube is immersed into the process medium, which medium is confined in a container and whose temperature is to be determined.

The fitting serves for receiving the measuring insert. The insert may have an elongated or rod-shaped part, also called stem portion or part, in which the sensor element is arranged, e.g. embedded in an electrically insulating material, preferably at the tip of the stem part. The sensor element can be a RTD, a thermistor (e.g. NTC or PTC) or a thermocouple. The insert may also comprise an end-plate on which a terminal block or a transmitter is arranged. The passage in the fitting may be fabricated into the fitting by way of drilling technique. The rod shaped part of the insert may be inserted into this passage. In order to seal the passage when no insert is present in the passage a resilient element and a sealing element are employed. The resilient element, which may be a spring, is used to hold the sealing element in a first position in which first position the sealing element seals the passage in preferably gas and/or liquid and/or pressure tight manner. The sealing element may e.g. block the passage when it is in the first position. Hence

The sealing element and the resilient element may e.g. form faucet which may be opened in one direction only, that is, the movement of the sealing element is restricted, e.g. by way of a body stop it is pressed against by way of the resilient element. The faucet can hence only be opened by a force exerted onto the sealing element which compresses the resilient element, for example compresses the spring.

When the spring is compressed, e.g. by a force acting on the sealing element, the sealing element is moved out of the first position and gives way for the insert to be inserted into the passage. The sealing element may be moved complete out of the alleyway the insert is inserted in. The passage can comprise a recess which serves to receive the sealing element when the sealing element is in the second position.

The sealing element can comprise e.g. a plug or another type of orifice adapted to block the passage in the first (rest) position.

In an embodiment of the fitting the fitting has a front end and a bottom end, wherein the fitting is connectable via the bottom end to a container wall.

In an embodiment of the fitting the measuring insert is insertable via the front end into the passage.

In an embodiment of the fitting the measuring insert is attachable to the front side of the measuring insert. The insert may comprise a connecting element for attaching the insert to the fitting. This connecting element may also serve to attach the insert to a housing. One or more connecting elements such as spring loaded screws may be employed.

In another embodiment of the fitting a gasket is arranged in the passage between the front end and the first position of the sealing element, which gasket serves to seal the passage, preferably in a gas and/or fluid tight manner, when a measuring insert is inserted into the passage.

In another embodiment of the fitting the sealing element serves to provide a gas and/or fluid tight sealing between the front end and the bottom end of the fitting when the sealing element is in the first position.

In another embodiment of the fitting the sealing element is kept in the first position by a preload of the resilient element, which preload has to be overcome by a force exerted, preferably directly, on the sealing element when the measuring insert is inserted into the passage in order to move the sealing element out of the first position into and into a second position.

In another embodiment of the fitting the movement of the sealing element from the first into the second position, has a component in radial direction of the passage.

In another embodiment of the fitting a preload is exerted onto the sealing element by the resilient element in the first position and the sealing element is thereby pressed into a mechanical-stop.

In another embodiment of the fitting said mechanical-stop comprises a gasket against which the sealing element is pressed.

In another embodiment of the fitting the sealing element gives way the passage when a force directed into the direction of the bottom end, which preferably exceeds the preload of the resilient element, of the fitting is exerted on the sealing element.

In another embodiment of the fitting the fitting consists of a first and a second part, wherein the first part comprises a process connection via which the fitting can be fixed to a container wall, wherein the second part is connectable to said first part, e.g. via a threaded connection, and the passage extends through the first and the second part.

In another embodiment of the fitting wherein the fitting consists of a first part, a second part, and a third part wherein the first part comprises a process connection via which the fitting can be fixed to a container wall, wherein the second part is connectable to said first part, e.g. via a threaded connection, and the passage extends through the first and the second part, wherein the third part comprises said sealing element and said resilient element and is arranged, preferably clamped, between the first and second part.

Regarding the measuring device the problem is solved by a measuring device comprising a fitting according to one of the preceding claims and a measuring insert, preferably for measuring temperature, which is inserted into the fitting.

The invention will further be explained on the basis of the following figures.
Fig. 1 a shows a schematic representation of an embodiment of the present invention, which comprises a fitting which is attached to a container wall, and wherein the sealing element of the fitting is in its first position,
Fig. 1b shows the step of inserting of the measuring insert into the fitting,
Fig. 1c shows the measuring insert inserted into the fitting and the sealing element in the second position giving way to the measuring insert in the passage of the fitting,
Fig. 2a shows a fitting with an alternative sealing element, wherein the sealing element is in its first position,
Fig. 2b shows according to figure 2a with an inserted measuring insert and the sealing element being in its second position,
Fig. 3a shows fitting with still another alternative sealing element, wherein the sealing element is in its first position, and
Fig. 3b shows the fitting according to Fig. 3a with the sealing element being in its second position and the measuring insert being inserted into the passage of the fitting.

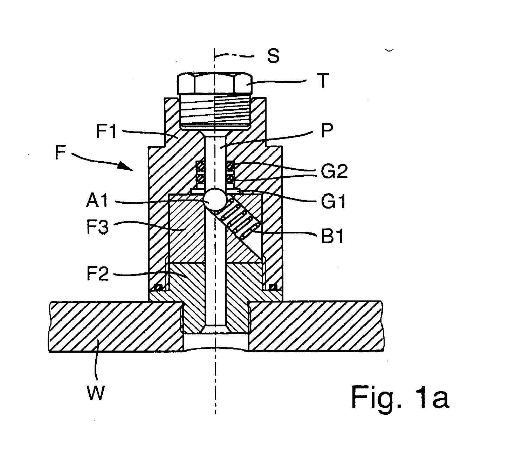

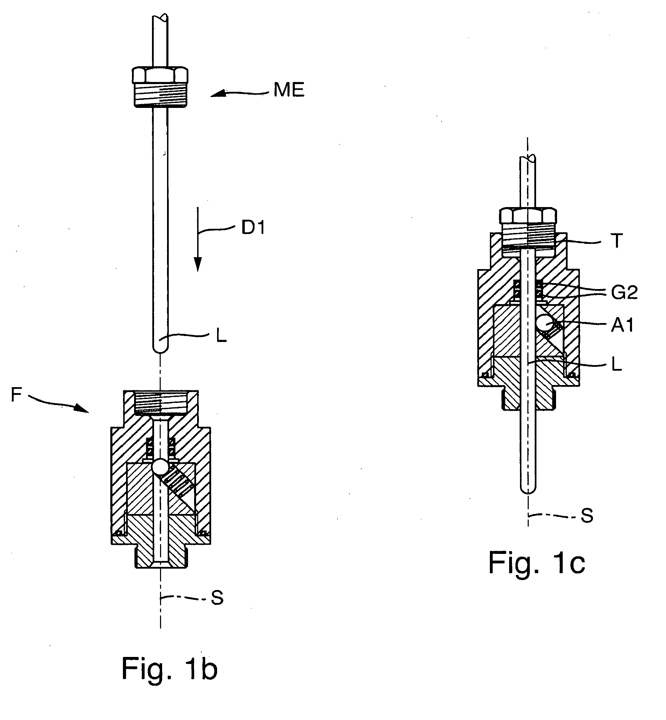

Figure 1 a shows an embodiment of the present invention, which comprises a fitting F which is attached to a container wall W, and wherein the sealing element A1 of the fitting F is in its first position.

The fitting F provides a mechanism A1, B1, A2, B2, A3, B3 which permits the measuring insert ME to be inserted and to be extracted in a pressurized sealed process, e.g. in a piping, a vessel or a tank, in working conditions, for example when it is pressurized, ensuring during insertion or extraction the confinement of the process medium. This may be achieved by one of the embodiments as shown in figures or modifications thereof.

The mechanism A1, B1, A2, B2, A3, B3 may be part of any process connection, e.g. a process connection fitting, a flanged process connection or a compression fitting. The proposed mechanism A1, B1, A2, B2, A3, B3 may be employed to insert a measuring instrument, such as a measuring insert, ME with a stem shaped part L, into a process medium, e.g. a fluid.

The mechanism A1, B1, A2, B2, A3, B3 may comprise a faucet A1, B1, G1 hat closes or opens a passage between the process side and the external environment. Hence, the faucet is closed in general. In this closed state the sealing element A1, A2, A3 is in its first (stop) position. This is ensured by e.g. a load due to the presence of a resilient element, here a spring B1, B2, B3 or by the pressure of the process medium or the combination of both.

The passage P may be opened by a thrust exerted on the sealing element A1, A2, A3 by a trigger, e.g. the stem L part of the measuring insert ME. Thus, it is possible to insert and/or extract the stem portion L of the measuring insert ME without any leakage of the process medium. The fitting F proposed may also enhance an existing process connection, it may e.g. be connected thereto, and thereby provide an additional sealing barrier between the process and the external environment, especially when the measuring insert ME is inserted and when the insert ME is extracted.

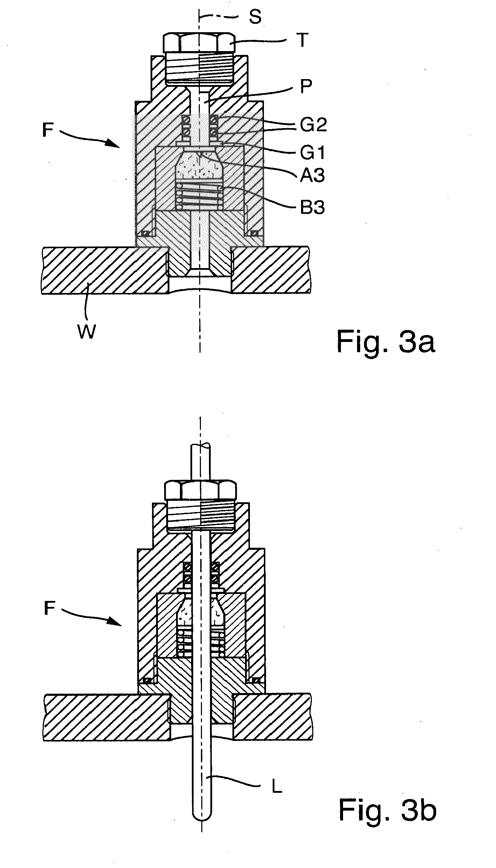

Another possibility to provide an effective sealing arises by the use of an orifice, e.g. as shown in figures 3a, 3b, made out a piece of elastomere which permits the insertion of the stem L of a measuring insert ME and automatically closes when the stem is extracted.

As shown in figure 1a the passage P must have a diameter sufficient for a cylindrical rigid stem L of a measuring insert ME to be inserted. Therefore the sealing element A1, A2, A3 does not only slide along the main axis S of the passage P but also into a direction radial to the main axis S in order to completely free the passage P.

At least one radial sealing G2, e.g. in the form of a gasket, is arranged in the passage P in order to avoid or limit leakage of the process medium during insertion or extraction of the measuring insert ME. This radial sealing G2 serves to ensure that the process medium is confined in the process container, i.e. inside its wall W, when the measuring insert ME, more precisely the rod shaped portion L of the insert ME, is inserted in the passage P of the fitting F.

Additionally a clamping system T for the measuring insert ME may be provided in order to lock the measuring insert ME in a certain position after it has been inserted in the passage P of the fitting F.

Different embodiments of such a fitting F and/or sealing element A1, A2, A3 and/or resilient element B1, B2, B3 are shown in figures 1a, 2a, 3a.

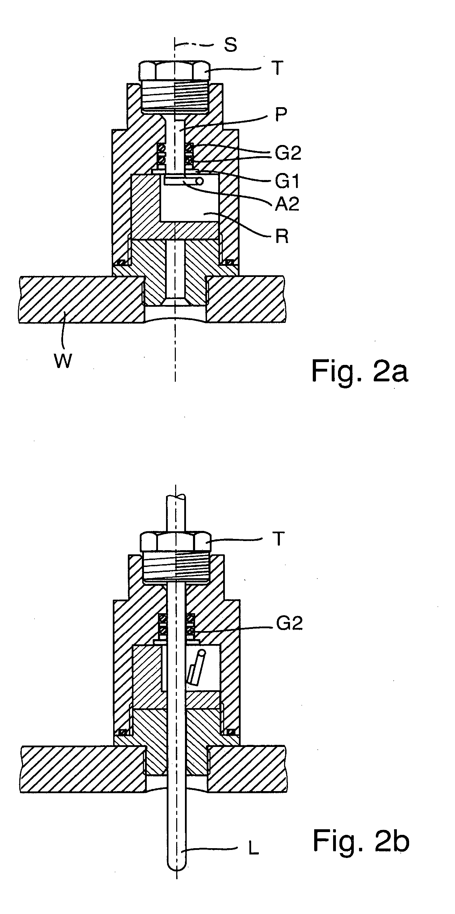

Figure 1 a shows a sealing element in the form of a sliding plug A1. Figure 2a shows a sealing element in the form of a tilting plug A2, whereas figure 3a shows sealing element A3 in the form of an elastomer orifice. These embodiments have in common that the passage P is locked in a first (stop) position of the sealing element A1, A2, A3, i.e. when no measuring insert ME is inserted. This first (stop) position is ensured by the action of a resilient element B1, B2, B3, in this case a spring, which may be reinforced by the action of a process medium pressure which may increase the tightening load.

When inserting the measuring insert ME into the passage P the stem L of the insert ME first passes the radial sealing G2. This first sealing G2 may be achieved by an O-Ring arranged in the passage P. When the tip of the measuring insert ME reaches the sealing element A1, A2, A3, e.g. the plug, the passage may be opened by pushing the tip of the measuring insert ME against the sealing element A1, A2, A3. Thus by way of the thrust exerted on the sealing element A1, A2, A3 the sealing element A1, A2, A3 is moved out of the first (stop) position. This thrust or pushing load has to be higher than the sum of the load of the resilient element B1, B2, B3 and the process pressure likely to be present. The stem L can then be fully inserted in the passage P and/or into the process. The sealing element A1, A2, A3 is thus pushed aside and into a second (stop) position, as e.g. shown in figures 1c, 2b, 3b.

The insert ME may then be locked in its working position, e.g. by way of a threaded connection T between the insert ME and the fitting F.

As shown in Figure 1 the fitting may comprise multiple parts F1, F2, F3. The passage P may run through all of these parts. To form such an opening the parts however may have to be aligned. Hence, all parts may have an opening which may be arranged in a concentrical way, e.g. when placed on top of each other. The first part F1 may comprise, as shown, a connection element T for connecting the measuring insert to the fitting. This connection element T can however serve to connect a housing, not shown, to the fitting F which housing in turn serves to receive the insert. Hence, the insert ME may be attached to the housing.

## Claims

1. A fitting (F) for a measuring insert (ME) of a thermometer, comprising:
a passage (P) through the fitting (F) in which passage (P) said measuring insert (ME) is insertable,
a resilient element (B1, B2, B3) and a sealing element (A1, A2, A3) operably coupled to the resilient element (B1, B2, B3),
wherein the sealing element (A1, A2, A3) is forced into a first position by the resilient element (B1, B2, B3) in which first position the sealing element (A1, A2, A3) seals the passage (P),
wherein the sealing element (A1, A2, A3) is forced out of said first position and
into a second position when a measuring insert (ME) is inserted into the passage (P) and thereby allows the positioning of the measuring insert (ME) in the passage (P) of the fitting (F).

2. A fitting (F) according to the preceding claim,
wherein the fitting (F) has a front end and a bottom end,
and wherein the fitting (F) is connectable via the bottom end to a container wall (W).

3. A fitting (F) according to the preceding claim,
wherein the measuring insert (ME) is insertable via the front end into the passage (P).

4. A fitting (F) according to one of the preceding claims,
wherein the measuring insert (ME) is attachable to the front side of the fitting (F).

5. A fitting (F) according to the preceding claim,
wherein a gasket (G2) is arranged in the passage (P) between the front end and the first position of the sealing element (A1, A2, A3), which gasket (G2) serves to seal the passage (P), preferably in a gas and/or fluid tight manner, when a measuring insert (ME) is inserted into the passage(P).

6. A fitting (F) according to one of the preceding claims,
wherein in the first position the sealing element (A1, A2, A3) serves to provide a gas and/or fluid tight sealing between the front end and the bottom end of the fitting (F).

7. A fitting (F) according to one of the preceding claims,
wherein the sealing element is kept in the first position by a preload of the resilient element (B1, B2, B3), which preload has to be overcome by a force exerted, preferably directly, on the sealing element (A1, A2, A3) when the measuring insert (ME) is inserted into the passage (P) in order to move the sealing element (A1, A2, A3) out of the first position into and into a second position.

8. A fitting (F) according to one of the preceding claims,
wherein the movement of the sealing element (A1, A2, A3) from the first into the second position, has a component in radial direction of the passage (P).

9. A fitting (F) according to one of the preceding claims,
wherein in the first position a preload is exerted onto the sealing element (A1, A2, A3) by the resilient element (B1, B2, B3) and the sealing element (A1, A2, A3) is thereby pressed into a mechanical-stop.

10. A fitting (F) according to the preceding claim,
wherein said mechanical-stop comprises a gasket (G1) against which the sealing element (A1, A2, A3) is pressed.

11. A fitting (F) according to one of the preceding claims,
wherein the sealing element (A1, A2, A3) gives way the passage when a force directed into the direction of the bottom end, which preferably exceeds the preload of the resilient element (B1, B2, B3), of the fitting (F) is exerted on the sealing element (A1, A2, A3).

12. A fitting (F) according to one of the preceding claims,
wherein the fitting consists of a first and a second part (F1, F2),
wherein the first part (F2) comprises a process connection via which the fitting (F) can be fixed to a container wall (W),
wherein the second part (F1) is connectable to said first part (F2), e.g. via a threaded connection, and
the passage (P) extends through the first and the second part (F1, F2).

13. A fitting (F) according to one of the preceding claims,
wherein the fitting (F) consists of a first part, a second part, and a third part (F1, F2, F3)
wherein the first part (F2) comprises a process connection via which the fitting (F) can be fixed to a container wall (W),
wherein the second part (F1) is connectable to said first part (F2), e.g. via a threaded connection, and
the passage (P) extends through the first and the second part (F1, F2), wherein the third part (F3) comprises said sealing element (A1, A2, A3) and said resilient element (B1, B2, B3) and is arranged, preferably clamped, between the first and second part (F1, F2).

14. A measuring device comprising a fitting (F) according to one of the preceding claims and a measuring insert (ME), preferably for measuring temperature, which is inserted into the fitting (F).
